# EUROPÄISCHE PATENTANMELDUNG

(11) **EP 3 069 918 A1**
(43) Veröffentlichungstag der Anmeldung: **21.09.2016**
(21) Anmeldenummer: 16157628.5
(22) Anmeldetag: 26.02.2016
(51) Int. Cl.: B60L 3/00, B60M 1/10, B60M 3/04, B60L 7/10, B60L 7/16, B60L 7/18, B60L 7/24, B60L 7/26, B60L 15/20

(54) **ANORDNUNG UND VERFAHREN FÜR EINE BREMSENERGIERÜCKSPEISUNG EINES FAHRZEUGS IN EINE FAHRLEITUNG**

(30) Priorität: 19.03.2015 DE 102015204962
(71) Anmelder: Siemens Aktiengesellschaft, 80333 München (DE)
(72) Erfinder: ALTMANN, Martin, 91054 Erlangen (DE); BIANCHI, Dr. Roberto, 91056 Erlangen (DE); BRODKORB, Dr. Albrecht, 99820 Hörselberg-Hainich (DE); DILLMANN, Klaus-Peter, 90587 Obermichelbach (DE); GRUBER, Dr. Rainer, 91560 Heilsbronn (DE)

(57) **Zusammenfassung**

Gegenstand der vorliegenden Erfindung ist eine Anordnung für eine Bremsenergierückspeisung eines Fahrzeugs, aufweisend: ein erstes Fahrzeug, das geeignet ist, beim Bremsen elektrische Energie in eine Fahrleitung zurückzuspeisen; einen Leistungsschalter für ein Verbinden eines Energieversorgungsnetzes mit der Fahrleitung, und
eine Schutzeinrichtung für ein Öffnen des Leistungsschalters in dem Fall, dass die beim Bremsen des Fahrzeugs zurück gespeiste elektrische Energie in das Energieversorgungsnetz fließt,
dadurch gekennzeichnet, dass
das erste Fahrzeug geeignet ist, erste Fahrzeuginformationen an die Schutzeinrichtung zu übermitteln, und
die Schutzeinrichtung geeignet ist, anhand der ersten Fahrzeuginformationen eine Rückspeisung von elektrischer Energie in das Energieversorgungsnetz zu erkennen.

Ferner ist Gegenstand der vorliegenden Erfindung ein Verfahren für eine Bremsenergierückspeisung eines Fahrzeugs mittels einer erfindungsgemäßen Anordnung.

## Beschreibung

Die Erfindung betrifft eine Anordnung für eine Bremsenergierückspeisung nach dem Oberbegriff des Anspruchs 1 sowie ein entsprechendes Verfahren nach dem Anspruch 13.

Üblicherweise werden für eine Bahnstromversorgung Unterwerke eingesetzt, die jeweils alle energietechnischen Komponenten aufweisen, um elektrische Energie aus einem Versorgungsnetz zu entnehmen und in für den elektrischen Antrieb von Schienenfahrzeugen geeignete elektrische Energie umzuwandeln, die dann in eine Fahrleitung bzw. einen Speiseabschnitt der Fahrleitung eingespeist wird. In der Regel werden als Versorgungsnetze dreiphasige Wechselspannungsnetze eingesetzt.

Moderne Züge setzen elektrische Bremsen ein. Diese Art von Bremsen wandelt beim Bremsvorgang die kinetische Energie des Schienenfahrzeugs in elektrische Energie um und speist diese in die Fahrleitung zurück. Durch dieses so genannte "Regenerative Braking" kann die Energie eines bremsenden Zuges an ein anderes Schienenfahrzeug im gleichen Speiseabschnitt übertragen werden, woraus sich eine Energieeinsparung ergibt. Die Energieeinsparung entsteht, weil die ansonsten als Wärme bei mechanischen Bremsen oder als Abwärme eines Bremswiderstands bei elektrischen Bremsen verlorene Energie stattdessen zum Antrieb eines weiteren Schienenfahrzeugs verwendet wird.

Diese Energierückspeisung kann jedoch zum Problem werden, wenn kein anderes Schienenfahrzeug die rückgespeiste elektrische Energie aufnimmt. In einem solchen Fall könnte die rückgespeiste elektrische Energie über das Unterwerk des betreffenden Speiseabschnitts in das Versorgungsnetz rückgespeist werden. Häufig bereitet eine solche Rückspeisung dem Betreiberunternehmen des Versorgungsnetzes jedoch Schwierigkeiten im Hinblick auf die Netzstabilität, so dass Betreiberunternehmen eine Rückspeisung in das Versorgungsnetz häufig durch Strafzahlungen - so genannte Pönale - wirtschaftlich unattraktiv gestalten.

Schutzeinrichtungen wie etwa Bahnschutzrelais enthalten oft eine Funktion für den Schutz gegen eine Rückspeisung. Wird eine Umkehrung des Stromflusses vom Versorgungsnetz in die Fahrleitung erkannt, so öffnet die Schutzeinrichtung einen Leistungsschalter und verhindert somit die Rückspeisung in das übergeordnete Versorgungsnetz. Dadurch wird aber die betreffende Stromversorgung des ganzen Abschnittes unterbrochen, und muss danach wieder zuverlässig zugeschaltet werden, um eine kontinuierliche Stromversorgung der Züge zu gewährleisten. Die Schutzeinrichtung erkennt die Rückspeisung durch ständige Überwachung von Strom- und Spannungswerten im Bereich des Unterwerks. Die Schutzeinrichtungen und Leistungsschalter sind dabei oft dem Unterwerk zugeordnet.

Ferner ist es aus dem Fachartikel "IEC 61850 On Wheels: The Integrated Traction Protection Network" von D B Hewings von Network Rail UK, erschienen in "Developments in Power System Protection (DPSP 2014), 12th IET International Conference", 31.03.2014-03.04.2014, bekannt, Züge und Unterwerke mit erweiterten Kommunikationsmöglichkeiten im IEC 61850 Standard auszurüsten.

An die Erfindung stellt sich die Aufgabe, eine gattungsgemäße Anordnung für eine Bremsenergierückspeisung eines Fahrzeugs in eine Fahrleitung anzugeben, die einen verbesserten Schutz gegen eine unerwünschte Rückspeisung von elektrischer Energie in ein Versorgungsnetz bietet.

Die Erfindung löst diese Aufgabe durch eine Anordnung gemäß dem Anspruch 1.

Durch die Merkmale des kennzeichnenden Teils des Anspruchs 1 wird es im Gegensatz zum Stand der Technik ermöglicht, eine unerwünschte Rückspeisung elektrischer Energie in das Energieversorgungsnetz zu erkennen, ohne auf Spannungs- und Strommesswerte im Unterwerk zugreifen zu müssen. Durch die Kommunikation zwischen Fahrzeug und Schutzeinrichtung wird die Sicherheit erhöht. Insbesondere ist eine Echtzeit-Auswertung der Fahrzeuginformationen vorteilhaft.

In einer bevorzugten Ausführungsform der erfindungsgemäßen Anordnung weist das Fahrzeug eine erste Kommunikationseinrichtung für das Senden der ersten Fahrzeuginformationen und die Schutzeinrichtung eine zweite Kommunikationseinrichtung für das Empfangen der ersten Fahrzeuginformationen auf. Dabei können die Fahrzeuginformationen beispielsweise über Funkverbindungen übertragen werden. Besonders gut geeignet sind Übertragungen nach dem GSM-R Standard, da dieser für den Bahnbetrieb entwickelt wurde.

In einer weiteren bevorzugten Ausführungsform der erfindungsgemäßen Anordnung weist das erste Fahrzeug elektrische Bremsen auf, die geeignet sind, beim Bremsvorgang kinetische Energie des Fahrzeugs in elektrische Energie umzuwandeln. Dies ist ein Vorteil, weil die elektrischen Bremsen eine Rekuperation der ursprünglich für das Beschleunigen des Fahrzeugs aufgewendeten elektrischen Energie ermöglichen.

In einer weiteren bevorzugten Ausführungsform der erfindungsgemäßen Anordnung weist das erste Fahrzeug einen Bremswiderstand auf, der geeignet ist, die beim Bremsen erzeugte elektrische Energie in Wärme umzusetzen. Dies ist ein Vorteil, weil das Fahrzeug so Bremsen kann, auch ohne dass die von den elektrischen Bremsen bereit gestellt elektrische Energie abgenommen wird.

In einer weiteren bevorzugten Ausführungsform der erfindungsgemäßen Anordnung ist ein zweites Fahrzeug vorgesehen, das geeignet ist, die durch das erste Fahrzeug beim Bremsen eingespeiste elektrische Energie aus der Fahrleitung für seinen Antrieb aufzunehmen. Dies ist vorteilhaft, weil die so beim Bremsen gewonnene Energie für ein Fahrzeug mit erhöhtem Energiebedarf, beispielsweise beim Beschleunigen oder einer Bergauf-Fahrt, verwendet werden kann.

In einer weiteren bevorzugten Ausführungsform der erfindungsgemäßen Anordnung ist das zweite Fahrzeug geeignet, zweite Fahrzeuginformationen an die Schutzeinrichtung zu übermitteln, und die Schutzeinrichtung ist geeignet, anhand der zweiten Fahrzeuginformationen zu erkennen, dass die beim Bremsen des ersten Fahrzeugs in die Fahrleitung rückgespeiste elektrische Energie vom zweiten Fahrzeug aufgenommen werden kann. Dies ist ein Vorteil, weil auch ohne Auswertung von Strom- und Spannungswerten seitens der Schutzeinrichtung aufgrund einer Datenkommunikation mit den Fahrzeugen erkannt wird, dass die beim Bremsen des ersten Fahrzeugs erzeugte elektrische Energie von einem anderen Fahrzeug aufgenommen werden kann und die Sicherheit in Bezug auf das Energieversorgungsnetz daher nicht gefährdet ist.

In einer weiteren bevorzugten Ausführungsform der erfindungsgemäßen Anordnung ist die Schutzeinrichtung geeignet, in dem Fall, dass die beim Bremsen des ersten Fahrzeugs in die Fahrleitung rückgespeiste elektrische Energie vom zweiten Fahrzeug aufgenommen werden kann, den Leistungsschalter geschlossen zu halten. Dies ist ein Vorteil, weil auf diese Weise das Energieversorgungsnetz nicht von der Fahrleitung abgetrennt wird, wenn keine Instabilitäten durch eine unkontrollierte Rückspeisung drohen.

In einer weiteren bevorzugten Ausführungsform der erfindungsgemäßen Anordnung sind der Leistungsschalter und die Schutzeinrichtung Teil eines Unterwerks einer Bahnstromversorgung. Dies ist ein Vorteil, weil die räumliche Gruppierung der Komponenten in einem Unterwerk weit verbreitet und platzsparend ist.

In einer weiteren bevorzugten Ausführungsform der erfindungsgemäßen Anordnung ist das erste und/oder das zweite Fahrzeug ein Schienenfahrzeug.

In einer weiteren bevorzugten Ausführungsform der erfindungsgemäßen Anordnung ist das erste und/oder das zweite Fahrzeug ein Straßenfahrzeug. Dabei kann es sich beispielsweise um einen Elektrobus oder einen Diesel-Hybrid-Bus mit Stromabnehmer handeln. Auch Grubenlaster verfügen häufig über einen elektrischen Zusatzantrieb.

In einer weiteren bevorzugten Ausführungsform der erfindungsgemäßen Anordnung werden die ersten und/oder die zweiten Fahrzeuginformationen nach dem Standard IEC 61850 übermittelt. Dies ist ein Vorteil, weil dieser Standard für die Datenkommunikation in der Schutztechnik weit verbreitet und erprobt ist.

In einer weiteren bevorzugten Ausführungsform der erfindungsgemäßen Anordnung umfassen die Fahrzeuginformationen mindestens eine der folgenden Informationen: eine per Satellitensignal ermittelte Position, insbesondere eine GPS-Position, des Fahrzeugs; einen Speiseabschnittbezeichner, der die Position des derzeit vom Fahrzeug genutzten Speiseabschnitt angibt; Strom- und Spannungsmesswerte der Fahrleitung an der aktuellen Position; ein binäres Kennzeichen für erhöhten Energiebedarf des Fahrzeugs, das insbesondere bei Beschleunigungsvorgängen als "wahr" gekennzeichnet wird; ein binäres Kennzeichen für Bremsenergierückspeisung des Fahrzeugs, das insbesondere bei Bremsvorgängen als "wahr" gekennzeichnet wird. Dies ist ein Vorteil, weil mittels der Fahrzeuginformationen bei der Schutzeinrichtung eine Echtzeit-Überprüfung von Energieverbrauch und Energieerzeugung durch Fahrzeuge in einem Speiseabschnitt durchgeführt wird.

Ferner stellt sich an die Erfindung die Aufgabe, ein Verfahren für eine Bremsenergierückspeisung eines Fahrzeugs mittels einer erfindungsgemäßen Anordnung anzugeben, das einen verbesserten Schutz gegen eine unerwünschte Rückspeisung von elektrischer Energie in ein Versorgungsnetz bietet.

Die Erfindung löst diese Aufgabe durch ein Verfahren nach Anspruch 13. Bevorzugte Ausführungsformen des erfindungsgemäßen Verfahrens ergeben sich aus den abhängigen Ansprüchen 14 und 15. Es ergeben sich dabei für das erfindungsgemäße Verfahren und seine Ausführungsformen jeweils sinngemäß die gleichen Vorteile wie eingangs für die erfindungsgemäße Anordnung erläutert.

Im Folgenden wird ein bevorzugtes Ausführungsbeispiel der erfindungsgemäßen Anordnung durch eine Figur näher erläutert. Dem Fachmann ist dabei offensichtlich, dass das Ausführungsbeispiel keine Einschränkung der Erfindung auf eine bestimmte Merkmalskombination beabsichtigt, sondern vielmehr mit allen im Beschreibungsteil erläuterten Ausführungsformen kombiniert werden kann.

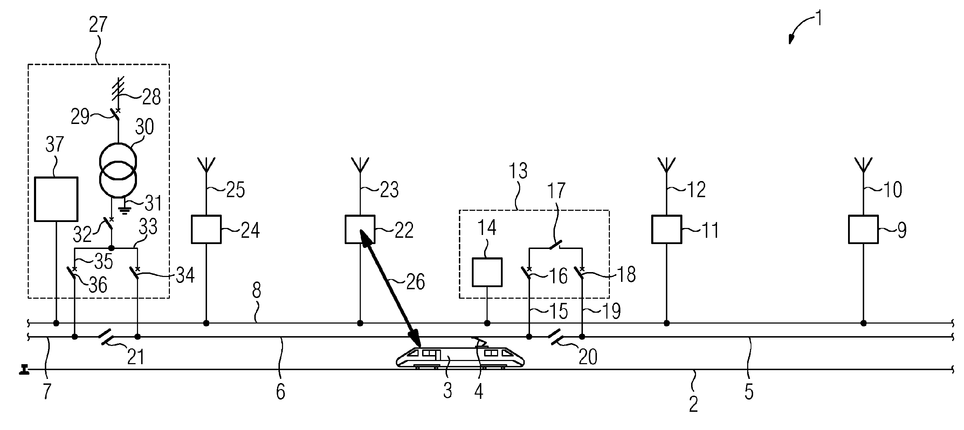

In der Figur ist ein bevorzugtes Ausführungsbeispiel einer erfindungsgemäßen Anordnung 1 abgebildet. Auf einem Bahngleis 2 fährt ein erstes Schienenfahrzeug - ein Zug - 3 mit einem Stromabnehmer 4. Der Stromabnehmer nimmt elektrische Energie aus einer Fahrleitung 5,6,7 ab, die in mehrere durch Trennstellen 20,21 getrennte Speiseabschnitte 5,6,7 geteilt ist.

Entlang der Bahnstrecke sind in regelmäßigen Abständen Funkstationen 9,11,22,24 mit Funkantennen 10,12,23,25 angebracht, die vom Zug 3 Fahrzeuginformationen 26 mittels des GSM-R Funkstandards empfangen können. Die Funkstationen 9,11,22,24 sind untereinander über einen Kommunikationsbus 8- beispielsweise über ein Kabel oder eine internetbasierte Verbindung - verbunden. Der Kommunikationsbus kann ein oder mehreren Protokolle unterstutzen, beispielweise eine Datenübertragung nach dem Standard IEC 61850. An den Kommunikationsbus 8 sind auch ein Unterwerk 27 und eine Schaltstelle 13 angeschlossen, die jeweils beidseitig in die an sie angeschlossenen Speiseabschnitte 5,6,7 speisen.

Die Schaltstelle 13 weist eine Stationsleittechnik 14 sowie zwei Speiseanschlüsse 15,19 auf, die mit zwei Leistungsschaltern 16,19 und einem Trennschalter 17 ausgerüstet sind.

Das Unterwerk 27 weist eine Stationsleittechnik 37 sowie zwei Speiseanschlüsse 33,35 auf, die mit zwei Leistungsschaltern 34,35 ausgerüstet sind. In die Stationsleittechnik 37 ist eine Schutzeinrichtung integriert. Die Speiseanschlüsse 33,36 werden über einen an den Leistungsschalter 32 angeschlossenen Transformator 30 mit elektrischer Energie versorgt, der fahrleitungsseitig eine weitere Phase auf Erdpotential 31 aufweist. Auf Seiten der Energieversorgung 28 ist über einen Leistungsschalter 29 ein dreiphasiges Hochspannungsnetz an den Transformator 30 angeschlossen.

Im Folgenden soll nun kurz auf die Funktionsweise der Anordnung 1 eingegangen werden. Fährt das erste Fahrzeug 3 auf den Gleisen 2 und wird es durch die Fahrleitung im Speiseabschnitt 6 versorgt, so ist der Leistungsschalter 16 geöffnet und die Leistungsschalter 34,32,29 sind geschlossen.

Das erste Fahrzeug 3 meldet bei einem bevorstehenden oder bereits begonnenen Bremsvorgang Fahrzeuginformationen 26 wie z.B. seine per GPS ermittelte Position per Funk an eine nahe Funkstation 22. Weiterhin meldet es als Teil der Fahrzeuginformation die Position und/oder einen Bezeichner, der den derzeit vom Fahrzeug genutzten Speiseabschnitt angibt. Auch Strom- und Spannungsmesswerte der Fahrleitung an der aktuellen Position werden übermittelt sowie die erwartete Energieeinspeisung beim Bremsen.

Außerdem wird ein binäres Kennzeichen - ein so genanntes "Flag" - für erhöhten Energiebedarf des Fahrzeugs, das insbesondere bei Beschleunigungsvorgängen als wahr gekennzeichnet wird, übertragen. Da das erste Fahrzeug jedoch nicht beschleunigt, sondern im Gegenteil abgebremst wird, wird das Kennzeichen für erhöhten Energiebedarf als "falsch" übertragen.

Des Weiteren wird ein binäres Kennzeichen für Bremsenergierückspeisung des Fahrzeugs, das insbesondere bei Bremsvorgängen als wahr gekennzeichnet wird, übertragen. Weil das Fahrzeug bremst, wird dieses Kennzeichen als "wahr" übertragen.

Die bei der Funkstation 22 empfangenen Fahrzeuginformationen 26 werden mittels des Kommunikationsbusses 8 an die Schutzeinrichtung, die Teil der Stationsleittechnik 37 ist, übermittelt.

Die Schutzeinrichtung erkennt anhand der ersten Fahrzeuginformationen eine Rückspeisung von elektrischer Energie in das Energieversorgungsnetz, denn es ist kein zweites Fahrzeug auf dem Speiseabschnitt vorhanden, das die erzeugte Energie aufnehmen könnte. Um eine unerwünschte Rückspeisung in das Versorgungsnetz 28 zu vermeiden, öffnet die Schutzeinrichtung den Leistungsschalter 34 und hält diesen bis zum Abschluss des Bremsvorgangs geöffnet. Das Fahrzeug 3 nutzt in dieser Zeit seinen Bremswiderstand.

## Patentansprüche

1. Anordnung (1) für eine Bremsenergierückspeisung eines Fahrzeugs, aufweisend:
ein erstes Fahrzeug (3), das geeignet ist, beim Bremsen elektrische Energie in eine Fahrleitung (5,6,7) zurückzuspeisen;
einen Leistungsschalter (34) für ein Verbinden eines Energieversorgungsnetzes (28) mit der Fahrleitung (5,6,7), und
eine Schutzeinrichtung für ein Öffnen des Leistungsschalters (34) in dem Fall, dass die beim Bremsen des Fahrzeugs zurück gespeiste elektrische Energie in das Energieversorgungsnetz (28) fließt,
**dadurch gekennzeichnet, dass**
das erste Fahrzeug (3) geeignet ist, erste Fahrzeuginformationen (26) an die Schutzeinrichtung zu übermitteln, und
die Schutzeinrichtung geeignet ist, anhand der ersten Fahrzeuginformationen (26) eine Rückspeisung von elektrischer Energie in das Energieversorgungsnetz zu erkennen.

2. Anordnung (1) nach Anspruch 1, **dadurch gekennzeichnet, dass** das Fahrzeug (3) eine erste Kommunikationseinrichtung für das Senden der ersten Fahrzeuginformationen (26) und die Schutzeinrichtung eine zweite Kommunikationseinrichtung für das Empfangen der ersten Fahrzeuginformationen (26) aufweisen.

3. Anordnung (1) nach Anspruch 1 oder 2, **dadurch gekennzeichnet, dass** das erste Fahrzeug (3) elektrische Bremsen aufweist, die geeignet sind, beim Bremsvorgang kinetische Energie des Fahrzeugs (3) in elektrische Energie umzuwandeln.

4. Anordnung (1) nach Anspruch 3, **dadurch gekennzeichnet, dass** das erste Fahrzeug (3) einen Bremswiderstand aufweist, der geeignet ist, die beim Bremsen erzeugte elektrische Energie in Wärme umzusetzen.

5. Anordnung (1) nach einem der vorhergehenden Ansprüche, **dadurch gekennzeichnet, dass** ein zweites Fahrzeug vorgesehen ist, das geeignet ist, die durch das erste Fahrzeug (3) beim Bremsen eingespeiste elektrische Energie aus der Fahrleitung (5,6,7) für seinen Antrieb aufzunehmen.

6. Anordnung (1) nach Anspruch 5, **dadurch gekennzeichnet, dass** das zweite Fahrzeug geeignet ist, zweite Fahrzeuginformationen an die Schutzeinrichtung zu übermitteln, und
die Schutzeinrichtung geeignet ist, anhand der zweiten Fahrzeuginformationen zu erkennen, dass die beim Bremsen des ersten Fahrzeugs (3) in die Fahrleitung rückgespeiste elektrische Energie vom zweiten Fahrzeug aufgenommen werden kann.

7. Anordnung (1) nach Anspruch 6, **dadurch gekennzeichnet, dass** die Schutzeinrichtung geeignet ist, in dem Fall, dass die beim Bremsen des ersten Fahrzeugs (3) in die Fahrleitung (5,6,7) rückgespeiste elektrische Energie vom zweiten Fahrzeug aufgenommen werden kann, den Leistungsschalter (34) geschlossen zu halten.

8. Anordnung (1) nach einem der vorhergehenden Ansprüche, **dadurch gekennzeichnet, dass** der Leistungsschalter (34) und die Schutzeinrichtung Teil eines Unterwerks (27) einer Bahnstromversorgung sind.

9. Anordnung (1) nach einem der vorhergehenden Ansprüche, **dadurch gekennzeichnet, dass** das erste und/oder das zweite Fahrzeug (3) ein Schienenfahrzeug ist.

10. Anordnung (1) nach einem der vorhergehenden Ansprüche, **dadurch gekennzeichnet, dass** das erste und/oder das zweite Fahrzeug ein Straßenfahrzeug ist.

11. Anordnung (1) nach einem der vorhergehenden Ansprüche, **dadurch gekennzeichnet, dass** das erste Fahrzeug (3) zur Übermittlung der ersten Fahrzeuginformationen (26) nach dem Standard IEC 61850 ausgebildet ist.

12. Anordnung (1) nach einem der vorhergehenden Ansprüche, **dadurch gekennzeichnet, dass** die Fahrzeuginformationen (26) mindestens eine der folgenden Informationen umfassen: eine per Satellitensignal ermittelte Position, insbesondere eine GPS-Position, des Fahrzeugs; einen Speiseabschnittbezeichner, der die Position der derzeit vom Fahrzeug genutzten Speiseabschnitt angibt; Strom- und Spannungsmesswerte der Fahrleitung an der aktuellen Position; ein binäres Kennzeichen für erhöhten Energiebedarf des Fahrzeugs, das insbesondere bei Beschleunigungsvorgängen als wahr gekennzeichnet wird; ein binäres Kennzeichen für Bremsenergierückspeisung des Fahrzeugs, das insbesondere bei Bremsvorgängen als wahr gekennzeichnet wird.

13. Verfahren für eine Bremsenergierückspeisung eines Fahrzeugs mittels einer Anordnung nach einem der Ansprüche 1 bis 12, **dadurch gekennzeichnet, dass**
durch das erste Fahrzeug (3) beim Bremsen elektrische Energie in die Fahrleitung zurückspeist wird und erste Fahrzeuginformationen (26) an die Schutzeinrichtung übermittelt werden, und
mittels der Schutzeinrichtung anhand der ersten Fahrzeuginformationen (26) eine Rückspeisung von elektrischer Energie in das Energieversorgungsnetz (28) erkannt und der Leistungsschalter (34) geöffnet wird.

14. Verfahren nach Anspruch 13, **dadurch gekennzeichnet, dass** ein zweites Fahrzeug verwendet wird, das die durch das erste Fahrzeug (3) beim Bremsen eingespeiste elektrische Energie aus der Fahrleitung (5,6,7) für seinen Antrieb aufnimmt und zweite Fahrzeuginformationen an die Schutzeinrichtung übermittelt.

15. Verfahren nach Anspruch 14, **dadurch gekennzeichnet, dass** mittels der Schutzeinrichtung zuerst anhand der zweiten Fahrzeuginformationen erkannt wird, dass die beim Bremsen des ersten Fahrzeugs (3) in die Fahrleitung rückgespeiste elektrische Energie vom zweiten Fahrzeug aufgenommen wird und anschließend der Leistungsschalter (34) geschlossen gehalten wird.
